**Europäisches Patentamt**

**European Patent Office**

**Office européen des brevets**

(19)

(11) Numéro de publication: **0 007 263**
**A1**

(12) **DEMANDE DE BREVET EUROPEEN**

(21) Numéro de dépôt: **79400413.5**

(22) Date de dépôt: **21.06.79**

(51) Int. Cl.³: **B 23 D 47/04**

(30) Priorité: **27.06.78 FR 7819834**

(43) Date de publication de la demande:
**23.01.80 Bulletin 80/2**

(84) Etats Contractants Désignés:
**AT BE DE GB IT NL SE**

(71) Demandeur: **Vierstraete, Jean**
**83 rue Victor Hugo**
**F-62590 Oignies(FR)**

(72) Inventeur: **Vierstraete, Jean**
**83 rue Victor Hugo**
**F-62590 Oignies(FR)**

(54) **Perfectionnements apportés aux tronçonneuses à coupes droites ou biaises pouvant être intégrées dans un chantier de perçage.**

(57) Perfectionnements apportés aux tronçonneuses à coupes droites ou biaises pouvant être intégrées à un chantier de perçage comportant deux colonnes (3 et 5) réunies parallèlement par deux organes de liaison (1 et 5) et sur lesquelles glissent: des palpeurs (24 à 29) réglables par des dispositifs (36 et 37, 53 et 54), et le réducteur (30) qui peut ainsi s'introduire entre les palpeurs (28 et 29) et pénétrer dans le profil (47) un ou des vérins (43) bloquent verticalement la pièce.

Un dispositif d'auto-centrage et de blocage (6 à 16) serre la pièce latéralement en agissant entre l'outil et le bâti de la machine.

Fig: 1

Croydon Printing Company Ltd.

EP 0 007 263 A1

- 1 -

Perfectionnements apportés aux tronçonneuses à coupes droites ou biaises pouvant être intégrées dans un chantier de perçage

L'Invention concerne une tronçonneuse à déplacement vertical de bas en haut comme il en existe déjà, celle-ci pouvant couper à l'aide de n'importe quel type d'outils coupants, abrasifs et divers, pouvant, éventuellement, être intégrée dans un chantier de tronçonnage permettant d'alimenter un ou plusieurs postes d'usinages.

Dans ce type de machine la capacité est réduite par l'encombrement du corps du support d'outil, lié à celui de la table de découpe, pouvant être fixe, ou rotative pour les coupes biaises, qui limitent la course verticale, de plus cette disposition empêche le corps du support d'outil de pénétrer à l'intérieur d'un fer en profil, tel un H, et réduit considérablement la capacité de la tronçonneuse et de l'outil, cet exemple est matérialisé par les brevets suivants :

Brevet Français N° 1091.467 : J et G MOULIN

Brevet Anglais N° 1156.468 : Robert HOWARD BUCKLEY

De plus une telle machine intégrée dans un banc équipé de convoyeurs à rouleaux a l'obligation d'avoir sa table rigoureusement alignée à la ligne de tête des rouleaux, pour déplacer le fer il faut donc obligatoirement avoir des rouleaux à soulèvement hydraulique, ou autre qui le soulèvent

pour permettré son déplacement en dessus de la table, procédé généralisé.

La présente invention a pour but d'appoter des remèdes à ces inconvénients et à solutionner l'ensemble des problèmes rencontrés sur ce type d'usinage.

L'Invention, telle qu'elle est caractérisée dans les revendications, résoud tout ceci en faisant glisser sur au moins deux colonnes, ou sur des glissières, par frottement, patins à billes ou à galets, ou autres procédés, l'ensemble du coulisseau support d'outil et, d'autre part, au moins un coulant actionné par au moins un vérin supportant au moins un palpeur inférieur de pièce qui peut être, soit ajouré à la forme supérieure du support d'outil et dans ce cas une ou plusieurs pièces intermédiaires peuvent venir combler cet espace libre pour permettre de scier des pièces de section étroite, soit d'au moins un coulant actionné par au moins un vérin et muni d'au moins un palpeur à écartement réglable permettant d'atteindre le même but, ce dispositif d'écartement pouvant être manuel ou motorisé et synchronisé, en troisième lieu, et sur la partie supérieure, un élément de liaison, formant chapeau, supporte un étau de blocage latéral autocentreur, brevet Français N°1593535 J. VIERSTRAETE, modifié et adapté à ce besoin, et au moins un vérin vertical bloquant la pièce sur le palpeur inférieur, ces dispositifs pouvant être mécaniques, hydrauliques, pneumatiques, hydro-pneumatiques, ou tout autres, il est également possible de disposer de plusieurs vérins de blocage vertical, de part et d'autre de l'outil de coupe pour soutenir l'âme du fer et contenir la poussée de l'outil.

A l'opposé du chapeau se situe le socle de la machine recevant le dispositif de montée de l'outil et tous les accessoires

0007263

propres au fonctionnement de l'ensemble, ces deux pièces maintenant les colonnes ou glissières dans un état de parallèlisme constant.

Les avantages obtenus sont les suivants :

Plus de rigidité, le coulisseau porte-outil se déplaçant sur la base des colonnes ou glissières, près du sol.

La suppression des dispositifs de rouleaux élévateurs.

L'auto-centrage et le blocage latéral de la pièce avant son blocage vertical.

L'absence de tous démontages et remontages de pièces entre différents types de pièces, en coupe droite ou en coupe biaise.

Un prix de revient inférieur puisque l'ensemble de la mécanique se situe sur les mêmes éléments de coulissement tout en étant très concentré.

La possibilité de concevoir des machines de très grosses capacités tout en restant très rigides.

Une capacité supérieure de tronçonnage.

Dans ce qui suit l'Invention est exposé plus en détail à l'aide de dessins représentant seulement un mode d'excécution non limitatif et prenant en exemple une tronçonneuse coupant à froid.

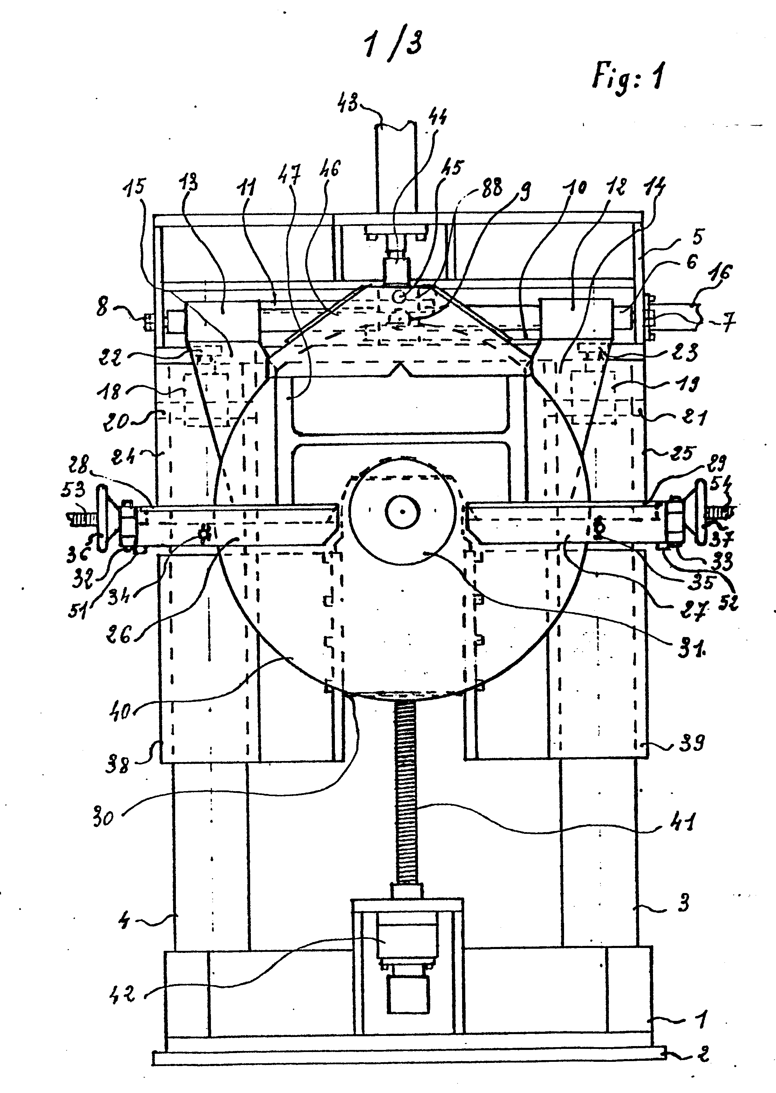

La figure 1 représente une vue de face d'une machine à scier à froid réalisée conformément à la présente Invention, en fin de coupe d'un fer H.

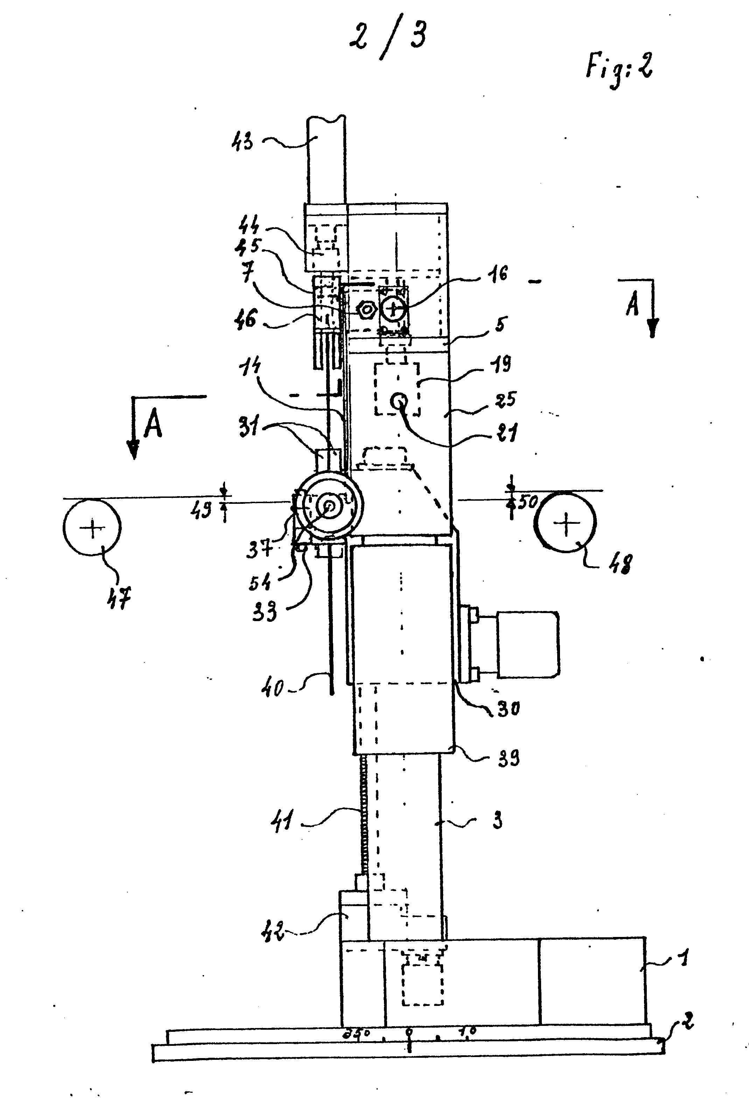

La figure 2 est une vue de profil de cette même machine, à la même position, représentée sans fer.

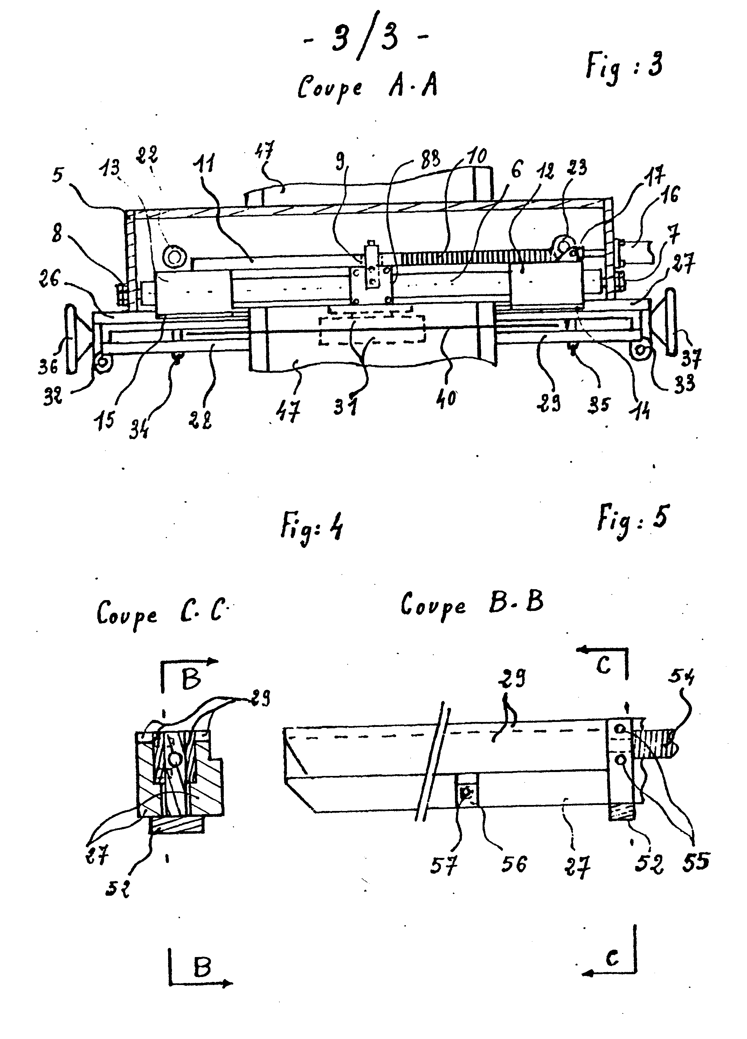

La figure 3 est une vue de dessus et coupe partielle des deux premières.

La figure 4 est une coupe selon CC d'une traverse et de son palpeur.

La figure 5 est une coupe selon BB de ce même ensemble.

Les figures représentent cette machine dont la base 1, qui peut être située ou non sur une plaque de rotation angulaire 2 quand il est envisagé d'exécuter des coupes biaises, reçoit 2 colonnes 3 - 4 dont le parallèlisme et l'alignement sont également assurés par un chapeau 5, ces dites colonnes étant maintenues par vis dans des alèsages ou par un emmanchement en force, à chaud ou à froid, par azote liquide par exemple.

Le chapeau 5 reçoit un dispositif de blocage et d'auto-centrage qui a été aménagé et amélioré pour cet usinage, il se compose d'un arbre 6 maintenu latéralement par des goujons et des contre-écrous 7, 8 et par une pièce centrale 88 qui supporte, par l'intermédiaire d'un axe, un pignon 9 qui s'engraine, en les liant dans leurs mouvements, dans deux crémaillère 10, 11 lesquelles assurent le déplacement synchronisé et concentrique de 2 coulants 12, 13, sur lesquels elles sont

- 5 -

attachées deux à deux : 10 sur 12 et 11 sur 13, solidaires de deux bras 14, 15 formant pince de centrage et de blocage latéral.

Le vérin hydraulique 16, fixé sur le chapeau 5, a sa tige solidaire du coulant 12, 14 par des oreilles 17 et un axe les traversant, la poussée du vérin s'exerce donc sur le coulant 12, 14 et la crémaillère 10, laquelle fera tourner le pignon 9 qui entraînera la crémaillère 11 et le coulant 13, 15 du même quantième assurant ainsi le centrage et le blocage de la pièce.

Sur la partie haute de chaque colonne coulisse un fût 24, 25 commandé par un vérin hydraulique 18, 19, la solidarisation de celui-ci avec son fût s'effectue à l'aide d'une broche cylindrique 20, 21 qui traverse des alésages pratiqués dans le couvercle arrière du vérin et dans le fût, en opposition centrée, à 180°, des lumières oblondes sont pratiquées dans les colonnes qui permettent le passage de ces axes augmenté de la course de ces vérins, la jonction avec le chapeau 5 se fait à l'aide de 2 écrous freinés 22, 23 vissés sur les tiges des vérins dont les épaulements s'appuient sur les deux faces perpendiculaires aux alésages de passage de ces dites tiges, opposées aux écrous.

Ces fûts reçoivent chacun, à leur base, une traverse 26, 27 limitée en longueur afin de laisser passer, sur leur côté interne et entre-elles, l'extrémité du réducteur de la scie 30.31.

Ces traverses sont ajourées afin de permettre à la lame de scie de passer entre-elles, leur partie extérieure est pivotante sur les charnières 32, 33, le blocage s'opérant par des vis à oreille 34, 35, cette disposition permettant le démontage et le montage de la lame.

Ces dispositifs reçoivent chacun un palpeur 28, 29 qui, pour répondre au même besoin, sont démontables de l'avant, des pionts de centrage et d'entraînement, fixés à la lame avant du palpeur, s'emmanchent dans des alèsages 55 qui solidarisent l'ensemble, pour contenir la poussée exercée sur lui par le fer bloqué par le vérin 43, un talon 51, 52 prend appui et coulisse sur le dessous de la traverse 26, 27.

Le positionnement et l'écartement entre eux de ces deux palpeurs est réglable à l'aide des volants 36, 37 formant écrous, solidaires des traverses, et agissant sur des vis 53, 54 maintenues à l'état fixe sur les palpeurs, ce qui permet de réduire leur écartement en fonction de l'importance décroissante des fers à couper.

Le sommet des palpeurs, en position haute, coïncide avec la ligne des têtes des rouleaux extérieurs à la scie 47, 48 ce qui correspond à l'accollement des fûts 24, 25 avec le chapeau 5 sous la traction de retrait des vérins 18, 19, d'où la position de coupe des palpeurs, la position basse, correspond à la sortie des tiges de ces vérins, l'écartement 49, 50, correspondant à leur course, permet la libre circulation des pièces au dessus des palpeurs.

Le moto-réducteur 30 entraîne en rotation la scie 40 par l'intermédiaire des flasques 31 et est solidaire des fûts 38, 39 pour ne former qu'un coulant, appelé également chariot, de sciage dont les mouvements sont régis par une vis 41 actionnée par un moto-réducteur à écrou tournant 42 s'appuyant sur la base 1, cet ensemble coulissant sur les colonnes 3, 4.

Sur le chapeau de la machine est fixé un vérin hydraulique 43 sur lequel est montée une chappe avant 44 et un axe 45 supportant une traverse de blocage vertical 46 disposant d'une course suffidante pour serrer des sections de fer du minimum au maximum, il est à noter que cette traverse peut également s'adapter à des cas spécifiques et que les vérins peuvent être d'un nombre suffisant pour serrer, de part et d'autre de la lame, le fer 47 sur son âme, neutralisant ainsi la poussée de l'outil et empêchant tout flambage.

I

## Revendications de brevets

I Machine à tronçonner à coupe ou biaise pouvant être intégrée
dans un chantier de tronçonnage, caractérisée par le fait qu'elle est constituée par au moins 2 colonnes ou glissières sur
lesquelles glissent d'une part, un coulisseau inférieur support
d'outil (30) (31) (38) (39), et d'autre part, des coulants ou
fûts supérieurs (24)) (25), pouvant être ou non reliés ensemble,
supportés par un ou plusieurs vérins (18) (19) et reliés au chapeau (5) solidaire des colonnes (3) (4), au moins une traverse
ajourée (26) (27) étant fixée sur la partie inférieure du coulant supérieur et réduite en longueur pour permettre le passage
du support d'outil (30) (31), cet espace libre pouvant être comblé par des prolongements ou palpeurs (28) (29), la machine
étant constituée en outre d'un étau de blocage latéral (14)
(15), ayant pour référence l'axe de la machine et centrant la
pièce (47) sur celui-ci, disposé dans le chapeau qui supporte
également au moins un vérin vertical (43) bloquant le profil
sur les palpeurs par l'intermédiaire d'au moins une traverse
de blocage vertical (46).

2.Machine selon 1 caractérisée par le fait que le support d'outil (30) (31) servant à l'entraînement en rotation de l'outil
(40) pénètre de bas en haut entre les traverses (26) (27) ainsi qu'à l'intérieur du profil (47) en cours de tronçonnage.

3.Machine selon 1 et 2 caractérisée par le fait que le support
inférieur de profil peut être constitué par 2 traverses (26)
(28) reliées chacune au coulant supérieur (24) (25) dont les
mouvements sont commandés par vérin et qu'il est possible de
ponter par un ou plusieurs palpeurs centraux afin de couper
les pièces de petites sections, ces dits mouvements, d'une part, plaquent les coulants supérieurs (24) (25) sur le chapeau (5) pour créer une référence constante de hauteur des palpeurs (28) (29), d'autre part, dégagent ces palpeurs d'une distance (49) (50) en deçà de la ligne des rouleaux extérieurs (47) (48) support de profil.

4. Machine selon 1 et 2 caractérisée par le fait que le support inférieur de profil peut être constitué par 2 traverses (26) (27) reliées chacune à un coulant supérieur (24) (25) dont les mouvements sont commandés par un vérin (18) (19) ces traverses recevant des palpeurs (28) (29) dont l'écartement est réglable par moyens (36) (53) (37) (54) dont les mouvements peuvent être ou non synchronisés.

Fig: 1

0007263

Fig: 2

- 3/3 -

Coupe A·A

Fig : 3

Fig: 4

Fig : 5

Coupe C·C

Coupe B·B

Office européen
des brevets

**RAPPORT DE RECHERCHE EUROPEENNE**

Numéro de la demande

EP 79 40 0413

| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendication concernée | |
| | US - A - 3 851 557 (VIERSTRAETE)<br>* Ensemble du document *<br><br>--<br><br>FR - A - 1 147 266 (MOULIN)<br>* Ensemble du document *<br><br>---- | 1,3,4<br><br><br><br>1,2 | B 23 D 47/04 |

**DOMAINES TECHNIQUES RECHERCHES (Int. Cl.3)**

B 23 D 47/00
45/00
B 24 B 27/00

**CATEGORIE DES DOCUMENTS CITES**

X: particulièrement pertinent
A: arrière-plan technologique
O: divulgation non-écrite
P: document intercalaire
T: théorie ou principe à la base
de l'invention
E: demande faisant interférence
D: document cité dans
la demande
L: document cité pour d'autres
raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 28-09-1979 | BERGHMANS |

OEB Form 1503.1 06.78